# EUROPEAN PATENT SPECIFICATION

(11) **EP 1 169 791 B1**
(45) Date of publication and mention of the grant of the patent: **11.05.2005**
(21) Application number: 00919991.0
(22) Date of filing: 31.03.2000
(51) Int. Cl.: H04B 7/185

(54) **SYSTEM AND METHOD FOR CORRELATING TRAFFIC CHANNEL SIGNAL MEASUREMENTS IN A COMMUNICATIONS SYSTEM**
ANORDNUNG UND VERFAHREN ZUR KORRELIERUNG SIGNALMESSUNGEN AUF VERKEHRSKANALEN IN KOMMUNIKATIONSSYSTEMEN
SYSTEME ET PROCEDE DE CORRELATION DES MESURES DE SIGNAUX DU CANAL TRAFIC D'UN SYSTEME DE COMMUNICATIONS

(30) Priority: 02.04.1999 US 127490 P; 31.03.2000 US 540222
(43) Date of publication of application: 09.01.2002
(73) Proprietor: QUALCOMM INCORPORATED, San Diego, CA 92121-1714 (US)
(72) Inventor: MILLER, David, S., Carlsbad, CA 92009 (US)
(74) Representative: Dunlop, Hugh Christopher
(86) International application number: PCT/US2000/008629
(87) International publication number: WO 2000/060769

(56) References cited:
- US-A- 5 448 758
- US-A- 5 530 915
- US-A- 5 742 635

## Description

### BACKGROUND OF THE INVENTION

### I. Field of the Invention

The present invention relates generally to wireless communication systems and networks. More particularly, the present invention relates to a method and apparatus for coordinating measurements taken at different locations or by different transceivers in a communications system. The invention further relates to making such measurements in a satellite communication system.

### II. Description of the Related Art

A typical terrestrial wireless communications system comprises at least one terrestrial base station and a number of mobile stations (for example, a mobile telephone). A base station can link a mobile station to other mobile stations or to a terrestrial network, such as a public telephone system. A typical satellite-based communications system comprises at least one terrestrial base station (hereinafter referred to as a gateway or hub), at least one user terminal (for example, a mobile telephone), and at least one satellite for relaying communications signals between the gateway and the user terminal. The gateway (GW) provides links from a user terminal (UT) to other user terminals or communications systems, such as a terrestrial telephone system.

Some satellite communications systems employ code division multiple access (CDMA) spread-spectrum signals, as disclosed in U.S. Patent No. 4,901,307, issued February 13, 1990, entitled *"Spread Spectrum Multiple Access Communication System Using Satellite or Terrestrial Repeaters*," and U.S. Patent 5,691,974, issued November 25, 1997, entitled *"Method And Apparatus For Using Full Spectrum Transmitted Power In A Spread Spectrum Communication System For Tracking Individual Recipient Phase Time And Energy*," both of which are assigned to the assignee of the present invention.

In satellite communication systems employing CDMA, separate communication links are used to transmit communication signals, such as data or traffic, to and from a gateway. The term "forward communication link" refers to communication signals originating at the gateway and transmitted to a user terminal. The term "reverse communication link" refers to communication signals originating at a user terminal and transmitted to the gateway. The transfer of signals to and from users over these links generally occurs over channels referred to as "traffic" channels. However, additional channels are used for access requests and paging messages, pilot signals, and synchronization signals.

On the forward link, information is transmitted from a gateway to a user terminal over one or more beams. These beams often comprise a number of so-called subbeams (also referred to as frequency division multiplex (FDM) or CDMA channels in a CDMA communication system) covering a common geographic area, each occupying a different frequency band.

More specifically, in a conventional spread-spectrum communication system, one or more pre-selected pseudorandom noise (PN) code sequences are used to modulate or "spread" user information signals over a predetermined spectral band prior to modulation onto a carrier signal for transmission as communication signals. PN spreading is a method of spread-spectrum transmission that is well known in the art, and produces a communication signal with a bandwidth much greater than that of the data signal. On the forward link, PN spreading codes or binary sequences are used to discriminate between signals transmitted by different gateways or over different beams, as well as between multipath signals. These codes are often shared by all communication signals within a given beam or subbeam.

In a conventional CDMA spread-spectrum communication system, "channelizing" codes are used to discriminate between different user terminals within a satellite subbeam on a forward link. That is, each user terminal has its own orthogonal channel provided on the forward link by using a unique channelizing orthogonal code. Walsh functions are generally used to implement the channelizing codes, also known as Walsh codes. The channelizing codes divide a subbeam into orthogonal channels, also known as Walsh channels. A majority of the Walsh channels are traffic channels that provide messaging between a user terminal and a gateway. The remaining Walsh channels often include pilot, sync, and paging channels. Signals sent over the traffic channels are typically meant to be received by only one user terminal, except for broadcast schemes where a set of users utilize a single channel. In contrast, paging, sync, and pilot channels may be monitored by multiple user terminals.

While the advent of the mobile user terminal has freed users to take their wireless devices, such as mobile phones, wherever they go, it has also imposed upon the satellite communications carrier the burden of determining the location of the user terminal. The need for user terminal position information stems from several considerations. One consideration is that the system should select an appropriate gateway for providing the communications link. One aspect of this consideration is allocation of a communications link to the proper service provider (for example, a telephone company). A service provider is typically assigned a particular geographic territory or even a service gateway, and handles all calls with users in that territory. When communications are required with a particular user terminal, the communications system can allocate the call to a service provider based on the territory within which the user terminal is located. In order to determine the appropriate territory, the communications system requires the position of the user terminal. A similar consideration arises when calls must be allocated to service providers based on political boundaries or contractual services, or for determining position related charges such as fees for "roaming." In addition, some emergency services may require position information.

Several methods of determining the location of the user terminal involve measuring the distance between the user terminal and the satellite. When this distance is combined with other data, such as the position of the satellite, the location of the user terminal can be determined with great precision. Techniques for determining user terminal location using satellite-user terminal range are disclosed in commonly-owned, US Patents entitled
"Position Determination Using One Low-Earth Orbit Satellite" No 6 107 959;
"Passive Position Determination Using Two Low-Earth Orbit Satellites" No 6 078 284; and
"Unambiguous Position Determination Using Two Low-Earth Orbit Satellites" No 6 327 534.

Theoretically, the user terminal-satellite range can be determined by combining certain measurements of the communications signals received at the gateway and the user terminal. However, in order to use this technique the relative timing of these measurements must be considered. Without an accurate assessment of this relative timing, the accuracy of position location measurements or computations suffers. This can lead to unacceptable errors, or delays created by requiring collection of additional measurements.

US Patent No 5 448 758 describes processing of despatch calls in a simulcast multi-site communication system beginning when a source communication unit transmits a message to one or more network receivers. The received signals are analysed immediately at the received sites for signal quality. Each of the signals are time-stamped to identify when they were received. The received signals are transported with their time stamp and signal quality metric to each of the other sites. A master transmitter site determines the receiver source with the best quality signal as indicated by the signal quality metric. The master transmitter then transports the chosen best quality signal to each of the other sites via a digital communication network. Each transmitter site performs a transmit operation by storing the chosen best quality signal until it is time to transmit the signal in phase with all the other transmitter sites in a simulcast manner. The time stamp allows a time in the future to be chosen to accommodate the worst case expected transport delay through the digital network.

What is needed is a way to correlate measurements of communications signals received at the gateway and user terminal to improve the accuracy of range measurements.

### SUMMARY OF THE INVENTION

The present invention is directed toward a method and apparatus useful for correlating measurements of communications signals taken at two stations in a wireless communication system. A useful application is a communication system having a user terminal and a gateway exchanging spread-spectrum code-division multiple-access communications signals using one or more satellites.
Preferably, measurement of the communication signals received at the first station are repeatedly taken and stored, generally at regular intervals. Measurements of the communication signals received at the second station are taken at a particular time, and one or more of the measurements taken at the first station are selected for correlation that was taken at a time nearest the second or particular time.

The measurement taken at the second station is preferably reported to the first station, and the second station selects a pair of stored measurements that were made or stored nearest in time to the first station measurement. The second station then applies interpolation or extrapolation between the two second station measurements to obtain a first station measurement that corresponds to the same time. More than two measurements can be used to select, interpolate, or extrapolate a signal measurement value.

To allow the selection and correlation process, the measurements may be time stamped in the first and second stations. The process of selecting then comprises selecting one of the measurements, or alternatively at least two, or more, taken at the first station having time-stamp values nearest the time-stamp value of the measurement taken at the second station.

In further embodiments of the invention, the first station is a gateway and the second station is a user terminal. Alternatively, the second station may be a gateway and the first station may be a user terminal.

Thus, according to a first aspect of the present invention, there is provided a method for correlating measurements of communications signals at first and second stations as set forth in claim 1.

According to a second aspect, there is provided a system for correlating measurements of communications signals at first and second stations as set forth in claim 12.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:
FIG. 1 illustrates an exemplary wireless communication system in which the present invention is useful;
FIG. 2 illustrates an exemplary wireless transceiver useful for user terminals in the system of FIG. 1;
FIG. 3 illustrates an exemplary wireless transceiver useful for gateways or base stations in the system of FIG. 1;
FIG. 4 is a flowchart depicting the operation of the present invention according to a preferred embodiment; and .
FIG. 5 depicts a timeline showing the relative timing of several gateway measurements and a user terminal measurement.

### DETAILED DESCRIPTION OF THE PREFERRED EMBODIMENTS

### I. Introduction

Embodiments of the present invention are particularly suited for use in wireless communications systems employing Low Earth Orbit (LEO) satellites. However, as would be apparent to one skilled in the relevant art, the concept of the present invention can also be applied to other satellite systems, or to non-satellite wireless systems in which improved correlation of signal measurements would be useful. Before discussing the embodiments of the present invention, a typical environment in which the invention can operate is presented.

### II. A Typical Communication System

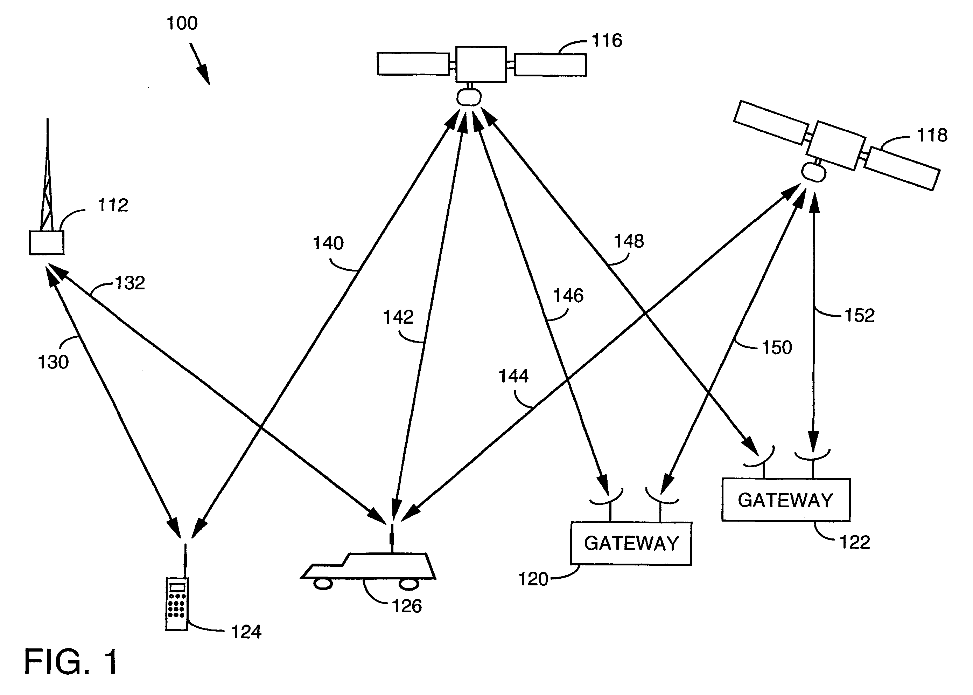

An exemplary wireless communication system is illustrated in FIG. 1. It is contemplated that this communication system uses CDMA type communication signals, but this is not required . In a portion of a communication system 100 illustrated in FIG. 1, one base station 112, two satellites 116 and 118, and two associated gateways or hubs 120 and 122 are shown for effecting communications with two remote user terminals 124 and 126. Typically, the base stations and satellites/gateways are components of separate communication systems, referred to as being terrestrial- and satellite-based, although this is not necessary. The total number of base stations, gateways, and satellites in such systems depends on desired system capacity and other factors well understood in the art.

User terminals 124 and 126 each include a wireless communication device such as, but not limited to, a wireless telephone, a data transceiver, or a paging or position determination receiver, and can be hand-held or vehicle-mounted as desired. However, it is also understood that the teachings of the invention are applicable to fixed units such as where remote wireless service is desired. User terminals are sometimes also referred to as subscriber units, mobile stations, mobile units, or simply as "users" or "subscribers" in some communication systems, depending on preference.

Generally, beams from satellites 116 and 118 cover different geographical areas in predefined patterns. Beams at different frequencies, also referred to as FDMA channels or CDMA channels (where CDMA type signals are used) or "sub-beams," can be directed to overlap the same region. It is also readily understood by those skilled in the art that beam coverage or service areas for multiple satellites, or antenna patterns for multiple base stations, might be designed to overlap completely or partially in a given region depending on the communication system design and the type of service being offered, and whether space diversity is being achieved.

A variety of multi-satellite communication systems have been proposed with an exemplary system employing on the order of 48 or more satellites, traveling in eight different orbital planes in LEO orbits for servicing a large number of user terminals. However, those skilled in the art will readily understand how the teachings of the present invention are applicable to a variety of satellite and non-satellite communication systems and base station/gateway configurations, including other orbital distances and constellations, or methods of creating moving signal sources. In addition, those skilled in the art will readily understand how the teachings of the present invention are applicable to a variety of terrestrial or other wireless communication systems where improved correlation of the signal measurements performed at base stations and mobile stations is desired.

In FIG. 1, some possible signal paths are illustrated for communications being established between user terminals 124 and 126 and base station 112, or through satellites 116 and 118, with gateways 120 and 122. The base station-user terminal communication links are illustrated by lines 130 and 132. The satellite-user terminal communication links between satellites 116 and 118, and user terminals 124 and 126 are illustrated by lines 140, 142, and 144. The gateway-satellite communication links, between gateways 120 and 122 and satellites 116 and 118, are illustrated by lines 146, 148, 150, and 152. Gateways 120 and 122, and base station 112, may be used as part of one or two-way communication systems, or simply to transfer messages or data to user terminals 124 and 126.

The preferred embodiment of the invention is discussed in detail below. While specific steps, configurations and arrangements are discussed, it should be understood that this is done for illustrative purposes only. A person skilled in the relevant art will recognize that other steps, configurations and arrangements can be used without departing from the scope of the present invention. The present invention could find use in a variety of wireless information and communication systems, including those intended for position determination. A preferred application is in CDMA wireless spread spectrum communication systems for wireless or mobile telephone service.

### III. Communication System Transceivers

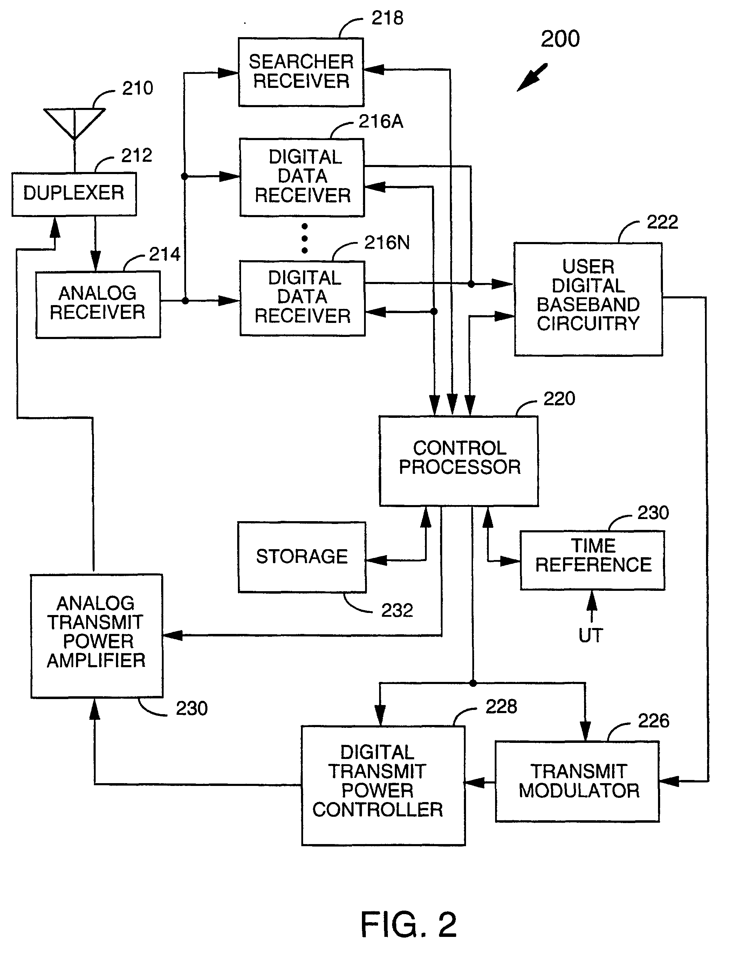

An exemplary transceiver 200 for use in user terminals 124,126 is illustrated in FIG. 2. Transceiver 200 uses at least one antenna 210 for receiving communication signals which are transferred to an analog receiver 214, where they are downconvened, amplified, and digitized. A duplexer element 212 is typically used to allow the same antenna to serve both transmit and receive functions. Digital communication signals output by analog receiver 214 are transferred to at least one digital data receiver 216A and at least one digital searcher receiver 218. Additional digital data receivers 216B-216N can be used to obtain desired levels of signal diversity, depending on the acceptable level of unit complexity, as would be apparent to one skilled in the relevant art.

At least one user terminal control processor 220 is coupled to data receivers 216A-216N and searcher receiver 218. Control processor 220 provides, among other functions, basic signal processing, timing, power and handoff control or coordination, and selection of frequency used for signal carriers. Another basic control function often performed by control processor 220 is the selection or manipulation of PN code sequences or orthogonal codes to be used for processing communication signal waveforms. Control processor 220 signal processing can include a determination of relative signal strength and computation of various related signal parameters, and may also include the use of additional or separate dedicated circuitry to provide increased efficiency or speed in measurements or improved allocation of control processing resources.

The outputs of digital data receivers 216A-216N are coupled to digital baseband circuitry 222 within the user terminal. User digital baseband circuitry 222 comprises processing and presentation elements used to transfer information to and from a user terminal user. That is, signal or data storage elements, such as memory; input and output devices such as display screens, speakers, and keypads; A/D elements, vocoders and other signal processing elements; etc., all form parts of the user terminal baseband circuitry using elements well known in the art. If diversity signal processing is employed, user digital baseband circuitry 222 can comprise a diversity combiner and decoder. Some of these elements may also operate under the control of, or in communication with, control processor 220.

When voice or other data is prepared as an output message or communications signal originating with the user terminal, user digital baseband circuitry 222 is used to receive, store, process, and otherwise prepare the desired data for transmission. User digital baseband circuitry 222 provides this data to a transmit modulator 226 operating under the control of control processor 220. The output of transmit modulator 226 is transferred to a power controller 228 which provides output power control to a transmit power amplifier 230 for final transmission of the output signal from antenna 210 to a gateway.

At least one time reference element 230 is used to generate and store chronological information such as date and time, which can be used to assist in determining satellite positions within known orbits. The time can be stored and updated periodically, and a Universal Time (UT) signal from a GPS receiver can be used as part of this process in some applications. The time may also be supplied to the user terminal periodically by a gateway or base station. In addition, current time or a set of time measurements can be stored in a memory device or storage element 232 such as when a user terminal enters an inactive mode, for example when it is "turned off", and used to determine various time dependent signal parameters, or when simply measuring time itself. The time information can be used to generate "time stamps" as discussed below. In combination with other elements such as the controller.

Information or data corresponding to one or more measured signal parameters for received communication signals, or one or more shared resource signals, and/or the "time" can be sent to the gateway using a variety of techniques known in the art. For example, the information can be transferred as a separate information signal or be appended to other messages prepared by user digital baseband circuitry 222. Alternatively, the information can be inserted as predetermined control bits by transmit modulator 226 or transmit power controller 228 under control of control processor 220.

Data receivers 216A-N and searcher receiver 218 are configured with signal correlation elements to demodulate and track specific signals. Searcher receiver 218 is used to search for pilot signals, or other relatively fixed pattern strong signals, while digital receivers 216A-N are used to demodulate other signals associated with detected pilot signals. A data receiver 216 can also be assigned to track or demodulate a pilot signal after acquisition. Therefore, the outputs of these units can be monitored to determine the energy in or frequency of the pilot signal or other signals. These receivers employ frequency tracking elements that can be monitored to provide current frequency and timing information, to control processor 220 for signals being demodulated.

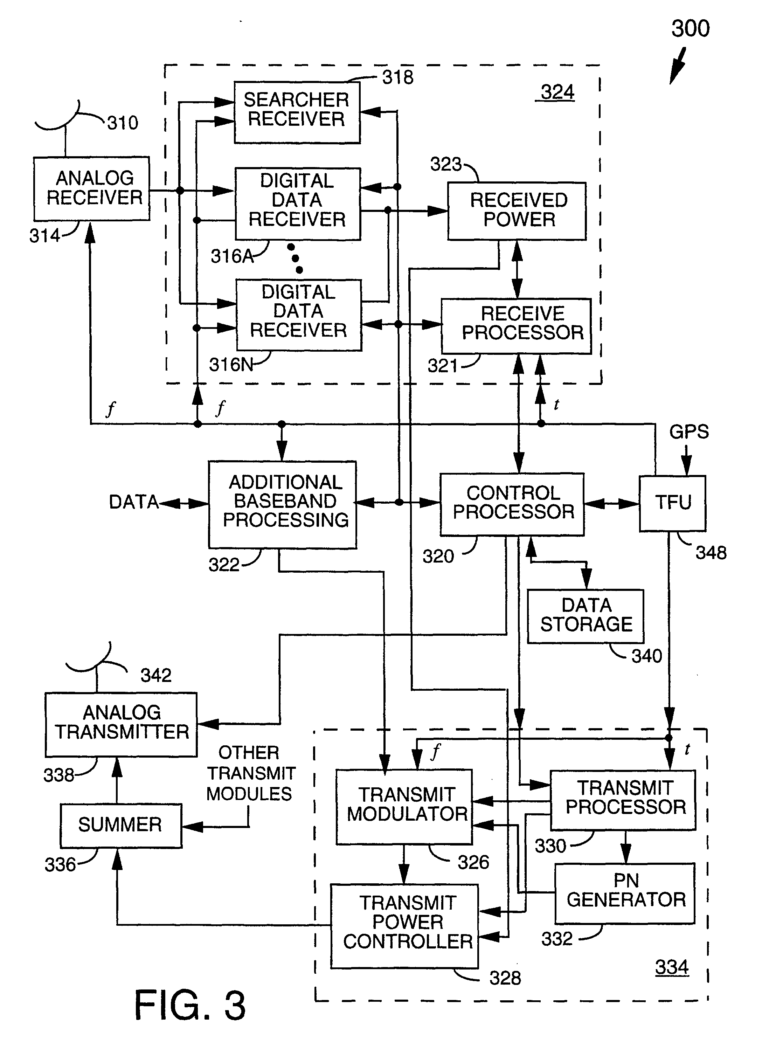

An exemplary transmission and reception apparatus 300 for use in gateways 120 and 122, or a base station, is illustrated in FIG. 3. Such apparatus is known in the art and discussed in the patents referenced above. For example, additional details on the operation of this type of apparatus are found in U. S. Patent No. 5,103,459, issued April 7, 1992, entitled *"System And Method For Generating Signal Waveforms In A CDMA Cellular Telephone,* " assigned to the same assignee as the present invention.

The portion of gateway 120, 122 illustrated in FIG. 3 has one or more analog receivers 314 connected to an antenna 310 for receiving communication signals which are then downconverted, amplified, and digitized using various schemes well known in the art. Digitized signals are provided as inputs to at least one digital receiver module, indicated by dashed lines generally at 324. One analog receiver 314 can provide inputs for many digital receiver modules 324, and a number of such modules are typically used in gateways to accommodate all of the satellite beams and possible diversity mode signals being accommodated. Each digital receiver module 324 has one or more digital data receivers 316 and searcher receivers 318. A searcher receiver 318 generally searches for appropriate diversity modes of signals other than pilot signals. Where implemented in the communication system, multiple digital data receivers 316A-316N are used for diversity signal reception.

The outputs of data receivers 316 are provided to subsequent baseband processing elements 322 comprising apparatus well known in the art and not illustrated in further detail here. Exemplary baseband apparatus includes diversity combiners and decoders to combine multi-path signals into one output for each user. Exemplary baseband apparatus also includes interface circuits for providing output data, typically to a digital switch or network. A variety of other known elements such as, but not limited to, vocoders, data modems, and digital data switching and storage components may form a part of baseband processing elements 322. These elements operate to also control or direct the transfer of data signals to one or more transmit modules 334.

Signals to be transmitted to user terminals are each coupled to one or more appropriate transmit modules 334, with the number of transmission modules 334 used by gateways 120, 122 being determined by factors well known in the art, including system complexity, number of satellites in view, user capacity, degree of diversity chosen, and the like.

Each transmit module 334 includes a transmit modulator 326 which spread spectrum modulates data for transmission and has an output coupled to a digital transmit power controller 328, which controls the transmission power used for the outgoing digital signal. Digital transmit power controller 328 applies a minimum level of power for purposes of interference reduction and resource allocation, but applies appropriate levels of power when needed to compensate for attenuation in the transmission path and other path transfer characteristics. At least one PN generator 332 is used by transmit modulator 326 in spreading the signals. This code generation can also form a functional part of one or more control processors or storage elements used in gateways 122, 124, or base station 112, and may be time shared.

The output of transmit power controller 328 is transferred to a summer 336 where it is summed with the outputs from other transmit power control circuits, which are for transmission to other user terminals 124, 126 at the same frequency and within the same beam. The output of summer 336 is provided to an analog transmitter 338 for digital-to-analog conversion, conversion to the appropriate RF carrier frequency, further amplification, filtering, and output to one or more antennas 340 for radiating to user terminals 124, 126. Antennas 310 and 340 may be the same antennas depending on the complexity and configuration of the system.

Timing adjustments are generally accomplished by having the control processor adjust code generation and timing or other signal parameter timing when a signal is generated at baseband and prior to output by power controller 328. Controller 320, for example, determines code timing and application, as well as when signals are transmitted to various satellites and user terminals by power controller 328.

As shown in FIG. 3, a time and frequency unit (TFU) 348 provides reference frequency and timing signals for various stages or processing elements within gateway or base station 300, such as analog receiver 314 and the correlators in digital receivers 316A-N and 318, or transmit modulator 326, and control processor 320. This information is used to establish the frequency or timing adjustment for each satellite being used by the gateway at any given time. A Universal Time (UT) signal from a GPS receiver can be used as part of this process in some applications. TFU 348 is also configured to retard or advance the relative timing of (clock) signals, under processor control, by predetermined amounts, as desired.

TFU 348 or other well known time reference elements, operating alone or in combination, are also used to generate and store chronological information such as date and time, which can be used to assist in determining satellite positions within known orbits. The time information can be stored in and retrieved from one or more memory device or storage elements 340. This data can also be provided from other data sources, as desired. A variety of well known devices such as RAM and ROM circuits, or magnetic storage devices can be used to construct storage elements 340, where information can be stored and updated periodically, as desired. The time information can be used to generate "time stamps" as discussed below.

At least one gateway control processor 320 is coupled to receiver modules 324, transmit modules 334, and baseband circuitry 322; these units may be physically separated from each other. Control processor 320 provides command and control signals to effect functions such as, but not limited to, signal processing, timing signal generation, power control, handoff control, diversity combining, and system interfacing. In addition, control processor 320 assigns PN spreading codes, orthogonal code sequences, and specific transmitters and receivers or modules for use in user communications. Control processor 320 also controls the generation and power of pilot, synchronization, and paging channel signals and their coupling to transmit power controller 328.

While control processor 320 can be coupled directly to the elements of a module, such as transmit module 334 or receive module 324, each module generally comprises a module-specific processor, such as transmit processor 330 or receive processor 321, which controls the elements of that module. Thus, preferably, control processor 320 is coupled to transmit processor 330 and receive processor 321, as shown in FIG. 3. In this manner a single control processor 320 can control the operations of a large number of modules and resources more efficiently. Transmit processor 330 controls generation of, and signal power for, pilot, synchronization, paging signals, and traffic channel signals, and their respective coupling to power controller 328. Receiver processor 321 controls searching, PN spreading codes for demodulation and monitoring received power.

For certain operations, such as shared resource power control, gateways 120 and 122 receive information such as received signal strength, frequency measurements, or other received signal parameters, or the user terminal "time", from user terminals in communication signals. This information can be derived from the demodulated outputs of data receivers 316 by receive processors 321. Alternatively, this information can be detected as occurring at predefined locations in the signals being monitored by control processor 320, or receive processors 321, and transferred to control processor 320. Control processor 320 uses this information to control the timing and frequency of signals being transmitted and processed using transmit power controllers 328 and analog transmitter 338, among other things.

### IV. Preferred Embodiment

As discussed above, a need exists for a technique that can correct for the time difference between the taking of a measurement of a communications signal at the gateway and the taking of a corresponding measurement at the user terminal. Once this time difference is accounted for, the user terminal and gateway measurements can be combined to calculate various useful parameters, such as user terminal location and correction factors for the user terminal local clock, or for local oscillator frequencies.

The user terminal and gateway measurements are preferably performed on signals transmitted and received over one or more traffic channels. The user terminal measurement is then reported to the gateway. The user terminal measurement can then be combined with a corresponding gateway measurement. However, measurements related to time of arrival and other signal parameters can also be performed on paging, synchronization, and access channel signals, and some time or measurement information can also be transferred using signals over these channels, as desired for some system configurations.

However, because the time or timing of the transfer of information to specific users over traffic channels is somewhat arbitrary or random, in terms of absolute system control, the time at which a user terminal measurement will be taken cannot be predicted with any accuracy. That is, traffic channels are used only when a user terminal desires to have a communication link established, such as to make or accept a "call" to a wireless phone. The establishment or existence of such calls is of course not a fixed periodic function and occurs at somewhat arbitrary times according to the desires of human operators or callers. Therefore, the timing of a measurement made by a user terminal is not known at the gateway until the user terminal measurement is received at the gateway. By then, of course, the user terminal measurement has already occurred, and it is too late to take a simultaneous gateway measurement.
Embodiments of the present invention solve this problem by periodically or regularly taking time measurements either at the gateway or the user terminal, establishing an historical measurement record, and later using this historical data to select or calculate a value that corresponds to a reported user terminal measurement. According to a preferred embodiment of the present invention, gateway measurements are taken at regular intervals using known techniques for measuring signal parameters such as code phase or timing in a spread spectrum signal, and time. The measurements or values are stored in a pre-selected location or memory device for later retrieval, or used immediately to make a determination. Alternatively, as discussed below, the user terminal makes periodic time measurements, and either stores or transfers them.

Gateways utilize known control processors and computer programs to effect many operations. Therefore, there are well known memory elements such as RAM and ROM circuits along with magnetic storage devices and associated storage and retrieval apparatus or devices available for storing such information, as discussed above. Furthermore, measurements are stored using one of many known techniques which allow association or knowledge of the time at which the measurements were taken with the measured value. For example, a memory can be structured such that it stores the measured value and an associated time in pairs. Alternatively, memory locations are indexed or assigned to certain times on some pre-selected time scale. Values are then stored according to the memory location corresponding to the time of the measurement.

The gateway memory used for this process can be very transient, that is, the data is preferably deleted or erased after a predetermined length of time which could be fairly short. Generally, there is a period after which a measurement is either considered not useful, or not likely to have been taken and still remain useful in this process. For example, measurements arriving many days or even many hours after being taken may be of no value, as having low accuracy or providing no useful position data. The corresponding gateway measurements might not be stored for that long, or could be stored in a different type of memory for alternative types of lower accuracy computations.

Then, when a user terminal measurement is reported to the gateway, the gateway selects one or more stored gateway measurements that were taken nearest the time at which the user terminal measurement was taken. The gateway then applies an interpolation process to the gateway measurements to obtain a gateway measurement that corresponds to the user terminal measurement. For example, the gateway can apply linear interpolation by selecting two measurements that are nearest but on either side of the user terminal measurement, and then generating a measurement value that would have been at the same time. Alternatively, where the user terminal periodically stores measurements and the corresponding time, the gateway reports measurements it takes to the user terminal which then applies interpolation to obtain a user terminal measurement that corresponds to the gateway measurement.

It should be understood that using two points and linear interpolation is not a limiting feature of the present invention. That is other known techniques for establishing a probable data value can be used. For example, the two values can simply be averaged or used to form some mean value and so forth. The two values can be on the same "side" of the time provided by the user terminal, or gateway, and used to extrapolate the desired value. In addition, multiple values can be used, such as 3 or more data points with two or more on each side of the reported measurement that is being analyzed. The use of multiple values and the specific technique should be applied consistently and have some statistically or historically relevant value for the accuracy being sought.

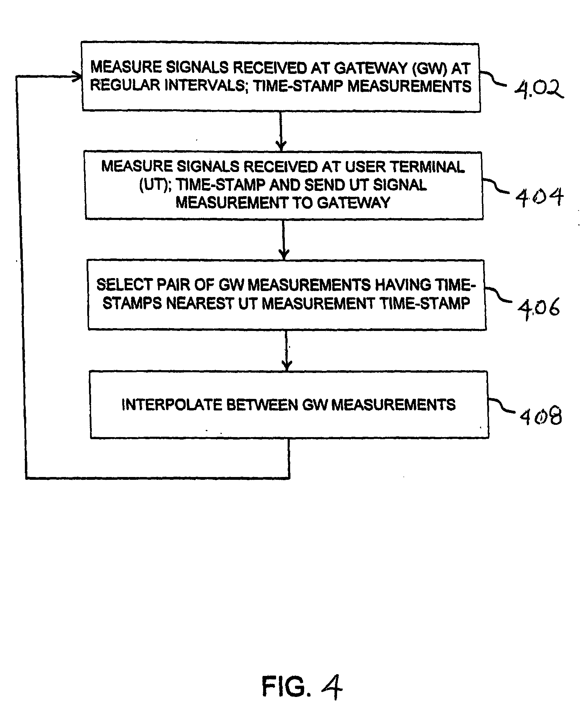

FIG. 4 is a flowchart depicting the operation of the present invention according to a preferred embodiment. The gateway takes measurements of the signals received at the gateway, as shown in a step 402. Representative measurements are described in commonly-owned US Patents entitled
"Position Determination Using One Low-Earth Orbit Satellite" No 6 107 959;
"Passive Position Determination Using Two Low-Earth Orbit Satellites" No 6 078 284; and
"Unambiguous Position Determination Using Two Low-Earth Orbit Satellites" No 6 327 534.

In a preferred embodiment, the gateway measurements are taken at regular intervals. These intervals are selected in accordance with known factors such as the anticipated length of or variation in path delay for signals, anticipated movement of user terminals, or the amount of circuitry and processing power needed to handle larger numbers of measurements as this interval is shortened. Clearly, the usefulness of the storage technique diminishes for those situations in which the user terminal measurement is arriving at the gateway very close to the time of the gateway measurements, and the minimum interval length should be set accordingly.

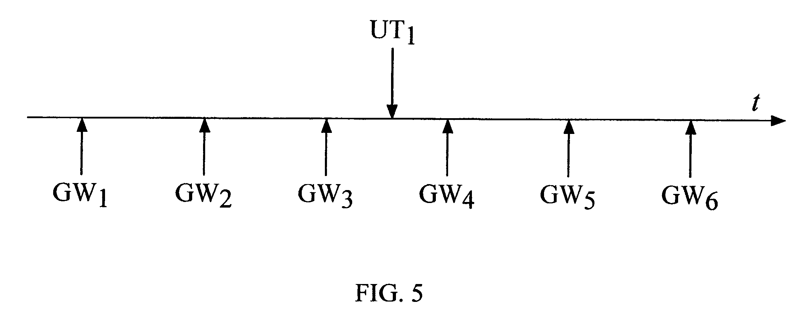

In one embodiment, the duration of the interval is 20ms. FIG. 5 depicts a timeline showing the relative timing of several gateway measurements GW₁ through GW₆. As discussed above, the timing of the gateway measurements must be known with accuracy. In a preferred embodiment, this is accomplished by time-stamping each measurement. The gateway stores each gateway measurement for future reference.

At some arbitrary time, the user terminal measures the signals it receives, as shown in a step 404 in FIG. 4. The timing of the user terminal measurement is shown in the timeline of FIG. 5 as UT₁. This measurement is time-stamped and reported to the gateway.

When the gateway receives the user terminal measurement, the gateway selects the pair of gateway measurements that are nearest in time to the user terminal measurement, as shown in a step 406. In other words, the gateway selects the pair of gateway measurements that were taken immediately before and immediately after, or nearest in time before and after, the user terminal measurement. In the example of FIG. 5, for user terminal measurement UT₁, the gateway selects gateway measurements GW₃ and GW₄. In a preferred embodiment, this selection is made by comparing the time stamp of the user terminal measurement to the time stamps of the stored gateway measurements. This can be accomplished for example by comparison to time data stored with the gateway measurements or to an index value for the stored data. Finally, the gateway interpolates between the selected gateway measurements to obtain a value that most nearly corresponds to the reported user terminal measurement, as shown in a step 208. Preferably, linear interpolation is used. However, other modes of interpolation or choosing a close value may be used where improved accuracy is achieved, or desired, as would be known. For example, one can use simple averaging or mean values discussed above.

When a user terminal measurement is reported to the gateway, the gateway may select the single stored gateway measurement that was taken nearest the time at which the user terminal measurement was taken. This approach is less accurate, but avoids the need for interpolation or other processing discussed above, which can reduce computational requirements for circuitry within a gateway and increase the speed of processing.

The procedures described above account for the difference in time between user terminal and gateway measurements with a high degree of accuracy. The calculated or selected gateway value can be combined with the corresponding user terminal measurement to determine many useful parameters such as user terminal position.

### V. Conclusion

The previous description of the preferred embodiments is provided to enable any person skilled in the art to make or use embodiments of the present invention. While the invention has been particularly shown and described with reference to preferred embodiments thereof, it will be understood by those skilled in the art that various changes in form and details may be made therein, without departing from the scope of the invention as defined by the claims.

## Claims

1. A method for correlating measurements of communications signals at first and second stations (112,120,122,124,126) in a wireless communication system (100) comprising the first station (112,120,122,124,126) and the second station (112,120,122,124,126) exchanging communications signals, the method **characterised by**:
repeatedly taking and storing a measurement of the communication signals received at the first station (112,120,122,124,126);
taking a measurement of the communication signals received at the second station (112,120,122,124,126) at a particular time;
transferring from one station (112,120,122,124,126) to the other (112,120,122,124,126) at least a time of measurement; and
selecting at least one of said measurements taken at the first station (112,120,122,124,126) that was taken at a time nearest said particular time.

2. The method of claim 1, further comprising:
interpolating between two of said measurements taken at the first station (112,120,122,124,126) based on said particular time.

3. The method of claim 1 or 2, further comprising reporting said measurement taken at said second station (112,120,122,124,126) to said first station (112,120,122,124,126).

4. The method of claim 1 or 2, further comprising taking said measurements taken at the first station (112,120,122,124,126) at regular time intervals.

5. The method of claim 1 or 2, further comprising:
time-stamping said measurements taken at the first station (112,120,122,124,126); and
time-stamping said measurement taken at the second station (112,120,122,124,126).

6. The method of claim 5, wherein said selecting at least one of said measurements taken at the first station (112,120,122,124,126) comprises selecting the one of said measurements taken at the first station (112,120,122,124,126) having time-stamp values nearest the time-stamp value of said measurement taken at the second station (112,120,122,124,126).

7. The method of claim 5, wherein said selecting at least one of said measurements taken at the first station (112,120,122,124,126) comprises selecting at least two of said measurements taken at the first station (112,120,122,124,126) having a time-stamp value nearest the time-stamp value of said measurement taken at the second station (112,120,122,124,126).

8. The method of claim 7, wherein said selecting at least one of said measurements taken at the first station (112,120,122,124,126) comprises interpolating a nearest-in-time measurement from said at least two measurements to have a time-stamp value substantially the same as the time-stamp value of said measurement taken at the second station (112,120,122,124,126).

9. The method of claim 7, when claim 5 is dependent on claim 1, wherein said selecting at least one of said measurements taken at the first station (112,120,122,124,126) comprises extrapolating a nearest-in-time measurement from said at least two measurements to have a time-stamp value substantially the same as the time-stamp value of said measurement taken at the second station (112,120,122,124,126).

10. The method of claim 1 or 2, wherein said communications system (100) is a satellite communications system, said first station is a gateway (120,122), said second station is a user terminal (124,126), and said gateway (120,122) and said user terminal (124,126) communicate via at least one satellite (116,118).

11. The method of claim 1 or 2, wherein said communications signals are spread spectrum code-division multiple-access traffic channel signals.

12. A system for correlating measurements of communications signals at first and second stations (112,120,122,124,126) in a wireless communications system (100) comprising the first station (112,120,122,124,126) and the second station (112,120,122,124,126) exchanging communications signals, said system for correlating measurements **characterised by** comprising:
means (200 to 222, 232, 300 to 324, 340) for repeatedly taking and storing a measurement of the communications signals received at the first station (112,120,122,124,126);
means (200 to 222, 232, 300 to 324, 340) for taking a measurement of the communications signals received at the second station (112,120,122,124,126) at a particular time;
means for transferring from one station (112,120,122,124,126) to the other (112,120,122,124,126) at least a time of measurement; and
means (200 to 222, 232, 300 to 324, 340) for selecting the one of said measurements taken at the first station (112,120,122,124,126) that was taken at the time nearest said particular time.

13. The system of claim 12, wherein:
said means (220, 232, 320, 340) for selecting are adapted to select one or more of said measurements taken at the first station (112,120,122,124,126) that were taken at the time nearest said particular time; said system further comprising:
means for interpolating between said measurements taken at the first station (112,120,122,124,126) based on said particular time.

14. The system of claim 12 or 13, further comprising means (200, 210, 212, 220 to 230) for reporting said measurement taken at said second station (112,120,122,124,126) to said first station (112,120,122,124,126).

15. The system of claim 12 or 13, further comprising means for taking said measurements taken at the first station (112,120,122,124,126) at regular intervals.

16. The system of claim 12 or 13, further comprising:
means (230, 232, 340, 348) for time-stamping said measurements taken at the first station (112,120,122,124,126); and
means (230, 232, 340, 348) for time-stamping said measurement taken at the second station (112,120,122,124,126).

17. The system of claim 16, when dependent on claim 13, wherein said means (220, 232, 320, 340) for selecting comprises means for selecting at least two of said measurements taken at the first station (112,120,122,124,126) having time-stamp values nearest the time-stamp value of said measurement taken at the second station (112,120,122,124,126).

18. The system of claim 17, wherein said means for interpolating comprises means for interpolating between said two measurements taken at the first station (112,120,122,124,126) based on said time-stamp of said measurement taken at said second station (112,120,122,124,126).

19. The system of claim 16, when dependent on claim 12, wherein said means (220, 232, 320, 340) for selecting comprises means for selecting the one of said measurements taken at the first station (112,120,122,124,126) having a time-stamp value nearest the time-stamp value of said measurement taken at the second station (112,120,122,124,126).

20. The system of claim 12 or 13, wherein said communication system (100) is a satellite communications system, said first station is a gateway (120,122), said second station is a user terminal (124,126), and said gateway (120,122) and said user terminal (124,126) communicate using at least one satellite (116,118).

21. The system of claim 12 or 13, wherein said communications signals are spread spectrum code-division multiple-access traffic channel signals.

22. The system of claim 12, comprising means for establishing a probable data value using said measurements taken at said first station (112,120,122,124,126) and based on said particular time.

23. The system of claim 22, wherein said means for establishing a probable data value is operable to establish said probable data value using three or more of said measurements taken at said first station (112,120,122,124,126).

24. The system of any of claims 12 to 15, 22 or 23, comprising means for assigning an index value to each of said measurements taken at said first station (112,120,122,124,126), wherein said means (200 to 222,232,300 to 324,340) for selecting is adapted to select said measurements taken at said first station (112,120,122,124,126) based on said index values.

25. The method of claim 1, comprising establishing a probable data value using said measurements taken at said first station (112,120,122,124,126) and based on said particular time.

26. The method of claim 25, wherein said establishing a probable data value comprises using three or more of said measurements taken at said first station (112,120,122,124,126).

27. The method of any of claims 1 to 4, 25 or 26, comprising assigning an index value to each of said measurements taken at said first station (112,120,122,124,126), wherein said selecting comprises select said measurements taken at said first station (112,120,122,124,126) based on said index values.

## Patentansprüche

1. Verfahren zum Korrelieren von Messungen von Nachrichten oder Kommunikationssignalen an ersten und zweiten Stationen (112, 120, 122, 124, 126) in einem drahtlosen Nachrichten- oder Kommunikationssystem (100), wobei die erste Station (112, 120, 122, 124, 126) und zweite Station (112, 120, 122, 124, 126) Nachrichtensignale austauschen und wobei das Verfahren durch folgendes gekennzeichnet ist:
wiederholtes Vornehmen und Speichern einer Messung der an der ersten Station (112, 120, 122, 124, 126) empfangenen Nachrichtensignale; Vornehmen einer Messung der an der zweiten Station (112, 120, 122, 124, 126) von zu einer bestimmten Zeit empfangenen Nachrichtensignale;
Übertragen von einer Station (112, 120, 122, 124, 126) zu der anderen (112, 120, 122, 124, 126) von mindestens einer Messzeit; und
Auswahl von mindestens einer der Messungen vorgenommen an der ersten Station (112, 120, 122, 124, 126), die zu einer Zeit vorgenommen wurde, die am nächsten zu der bestimmten Zeit liegt.

2. Verfahren nach Anspruch 1, wobei ferner folgendes vorgesehen ist:
Interpolieren zwischen zwei der erwähnten Messungen, die an der ersten Station (112, 120, 122, 124, 126) vorgenommen sind basierend auf der bestimmten Zeit.

3. Verfahren nach Anspruch 1 oder 2, wobei ferner folgendes vorgesehen ist:
Berichten der an der zweiten Station (112, 120, 122, 124, 126) vorgenommenen Messung an die erste Station (112, 120, 122, 124, 126).

4. Verfahren nach Anspruch 1 oder 2, wobei ferner folgendes vorgesehen ist:
Vornahme der erwähnten Messungen vorgenommen an der ersten Station (112, 120, 122, 124, 126) zu regelmäßigen Zeitintervallen.

5. Verfahren nach Anspruch 1 oder 2, wobei ferner folgendes vorgesehen ist:
Zeitliches Markieren bzw. Stempeln der erwähnten Messungen vorgenommen an der ersten Station (112, 120, 122, 124, 126); und
zeitliches Markieren bzw. Stempeln der erwähnten Messungen vorgenommen an der zweiten Station (112, 120, 122, 124, 126).

6. Verfahren nach Anspruch 5, wobei das erwähnte Auswählen der mindestens einen der Messungen vorgenommen an der ersten Station (112, 120, 122, 124, 126) folgendes aufweist:
Auswahl der einen der erwähnten Messungen vorgenommen an der ersten Station (112, 120, 122, 124, 126) mit Zeitstempel bzw. Markierungswerten am nächsten zu dem Zeitstempel bzw. Markierungswert der erwähnten Messung vorgenommen an der zweiten Station (112, 120, 122, 124, 126)

7. Verfahren nach Anspruch 5, wobei die erwähnte Auswahl der mindestens einen der Messungen vorgenommen an der ersten Station (112, 120, 122, 124, 126) die Auswahl von mindestens zwei der Messungen vorgenommen an der ersten Station (112, 120, 122, 124, 126) mit einem Zeitmarkierungs- oder Stempelwert am nächsten zu dem Zeitmarkierungs- bzw. Stempelwert der erwähnten Messung vorgenommen an der zweiten Station (112, 120, 122, 124, 126) besitzt.

8. Verfahren nach Anspruch 7, wobei das erwähnte Auswählen der mindestens einen der erwähnten Messungen vorgenommen an der ersten Station (112, 120, 122, 124, 126) folgendes aufweist:
Interpolation einer zeitlich am nächsten liegenden Messung aus den erwähnten mindestens zwei Messungen, um einen Zeitmarkierungs- bzw. Stempelwert zu besitzen, der im Wesentlichen der gleiche ist wie der Zeitstempel- bzw. Markierungswert der erwähnten Messung vorgenommen an der zweiten Station (112, 120, 122, 124, 126).

9. Verfahren nach Anspruch 7 bei Abhängigkeit des Anspruch 5 vom Anspruch 1, wobei die erwähnte Auswahl von mindestens einer der erwähnten Messungen vorgenommen an der ersten Station (112, 120, 122, 124, 126) folgendes aufweist:
Extrapolieren einer zeitlich am nächsten liegenden Messung von den mindestens zwei Messungen um einen Zeitmarkierungs- oder Stempelwert zu besitzen, der im wesentlichen der gleiche ist wie der Zeitmarkierungs- bzw. Stempelwert der Messung, vorgenommen an der zweiten Station (112, 120, 122, 124, 126).

10. Verfahren nach Anspruch 1 oder 2, wobei das Nachrichtensystem (100) ein Satellitennachrichtensystem ist, wobei die erste Station ein Gateway (120, 122), und die zweite Station ein Benutzeranschluss (124, 126) ist, und wobei das Gateway (120, 122) und der Benutzeranschluss (124, 126) über mindestens einen Satelliten (116, 118) in Verbindung stehen.

11. Verfahren nach Anspruch 1 oder 2, wobei die erwähnten Nachrichtensignale Spreizspektrum CDMA-Verkehrskanalsignale sind.

12. System zum Korrelieren von Messungen von Nachrichtensignalen an ersten und zweiten Stationen (112, 120, 122, 124, 126) in einem drahtlosen Nachrichtensystem (100), wobei die erste Station (112, 120, 122, 124, 126) und die zweite Station (112, 120, 122, 124, 126) Nachrichtensignale austauschen, wobei das System zur Korrelierung der Messungen **gekennzeichnet ist durch** folgendes:
Mittel (200 bis 222, 232, 300 bis 324, 340) zum wiederholten Vornehmen und Speichern einer Messung von Nachrichtensignalen empfangen an der ersten Station (112, 120, 122, 124, 126);
Mittel (200 bis 222, 232, 300 bis 324, 340) zum Vornehmen einer Messung der Nachrichtensignale empfangen an der zweiten Station (112, 120, 122, 124, 126) zu einer bestimmten Zeit;
Mittel zum Übertragen von einer Station (112, 120, 122, 124, 126) zu der anderen (112, 120, 122, 124, 126) von mindestens einer Zeitmessung; und
Mittel (200 bis 222, 232, 300 bis 324, 340) zur Auswahl der einen der erwähnten Messungen vorgenommen an der ersten Station (112, 120, 122, 124, 126), die zu einer Zeit am nächsten zu der erwähnten bestimmten Zeit vorgenommen wurde.

13. System nach Anspruch 12, wobei folgendes vorgesehen ist:
die Mittel (200, 232, 320, 340) zur Auswahl sind geeignet, um eine oder mehrere der erwähnten Messungen vorgenommen an der ersten Station (112, 120, 122, 124, 126) auszuwählen, die zu einer Zeit am nächsten der bestimmten Zeit vorgenommen wurde bzw. wurden, wobei das System ferner folgendes aufweist: und
Mittel zum Interpolieren zwischen den erwähnten Messungen vorgenommen an der ersten Station (112, 120, 122, 124, 126) basierend auf der erwähnten bestimmten Zeit.

14. System nach Anspruch 12 oder 13, wobei ferner Mittel (200, 210, 212, 220 bis 230) vorgesehen sind, um die an der zweiten Station (112, 120, 122, 124, 126) vorgenommene Messung an die erste Station (112) zu berichten.

15. System nach Anspruch 12 oder 13, wobei ferner Mittel vorgesehen sind zum Vornehmen von Messungen vorgenommen an der ersten Station (112, 120, 122, 124, 126) zu regelmäßigen Intervallen.

16. System nach Anspruch 12 oder 13, wobei ferner folgendes vorgesehen ist:
Mittel (230, 232, 340, 348) zur Zeitmarkierung der Messung vorgenommen an der ersten Station (112, 120, 122, 124, 126); und
Mittel (230, 232, 340, 348) zur Zeitmarkierung der erwähnten Messungen vorgenommen an der zweiten Station (112, 120, 122, 124, 126).

17. System nach Anspruch 16 bei Abhängigkeit von Anspruch 13, wobei die erwähnten Mittel (220, 232, 320, 340) zum Auswählen Mittel aufweisen zum Auswählen von mindestens zwei der erwähnten Messungen vorgenommen an der ersten Station (112, 120, 122, 124, 126) mit Zeitmarkierungswerten am nächsten zu dem Zeitmarkierungswert der erwähnten Messung vorgenommen an der zweiten Station (112, 120, 122, 124, 126).

18. System nach Anspruch 17, wobei die Mittel zum Interpolieren folgendes aufweisen:
Mittel zum Interpolieren zwischen den erwähnten zwei Messungen vorgenommen an der ersten Station (112, 120, 122, 124, 126) basierend auf der erwähnten Zeitmarkierung der erwähnten Messung vorgenommen an der zweiten Station (112, 120, 122, 124, 126).

19. System nach Anspruch 16 bei Abhängigkeit von Anspruch 12, wobei die Mittel (220, 232, 320, 340) zum Auswählen folgendes aufweisen:
Mittel zum Auswählen der einen der erwähnten Messungen vorgenommen an der ersten Station (112, 120, 122, 124, 126) mit einem Zeitmarkierungswert am nächsten zu dem Zeitmarkierungswert der erwähnten Messung vorgenommen an der zweiten Station (112, 120, 122, 124, 126).

20. System nach Anspruch 12 oder 13, wobei das Nachrichtensystem (100) ein Satellitennachrichtensystem ist, wobei die erste Station ein Gateway (120, 122), die zweite Station ein Benutzeranschluss (124, 126) ist, und wobei das Gateway (120, 122) und der Benutzeranschluss (124, 126) unter Verwendung von mindestens einem Satelliten (116, 118) in Verbindung stehen.

21. System nach Anspruch 12 oder 13, wobei die erwähnten Nachrichtensignale Spreizspektrum CDMA-Verkehrskanalsignale sind.

22. System nach Anspruch 12, wobei Mittel vorgesehen sind zum Vorsehen oder Festlegen eines wahrscheinlichen Datenwertes unter Verwendung der erwähnten Messungen vorgenommen an der ersten Station (112) und basierend auf der erwähnten bestimmten Zeit.

23. System nach Anspruch 22, wobei die erwähnten Mittel zum Vorsehen eines wahrscheinlichen Datenwertes betätigbar sind, um den erwähnten wahrscheinlichen Datenwert unter Verwendung von drei oder mehr der erwähnten Messungen vorgenommen an der ersten Station (112, 120, 122, 124, 126) vorzusehen.

24. System nach einem der Ansprüche 12 bis 15, 22 oder 23, wobei Mittel vorgesehen sind zum Zuweisen eines Indexwertes zu jeder der erwähnten Messungen vorgenommen an der ersten Station (112, 120, 122, 124, 126), wobei die Mittel (200 bis 222, 232, 300 bis 324, 340) zum Auswählen geeignet sind, die erwähnten Messungen vorgenommen an der ersten Station (112, 120, 122, 124, 126) basierend auf den erwähnten Indexwerten auszuwählen.

25. Verfahren nach Anspruch 1, wobei das Vorsehen bzw. Festlegen eines wahrscheinlichen Datenwertes vorgesehen ist, und zwar unter Verwendung der erwähnten Messungen vorgenommen an der ersten Station (112, 120, 122, 124, 126) und basierend auf der erwähnten bestimmten Zeit.

26. Verfahren nach Anspruch 25, wobei das erwähnte Vorsehen bzw. Festlegen eines wahrscheinlichen Datenwertes folgendes aufweist: Verwendung von drei oder mehr der erwähnten Messungen vorgenommen an der ersten Station (112, 120, 122, 124, 126).

27. Verfahren nach einem der Ansprüche 1 bis 4, 25 oder 26, wobei das Zuweisen eines Indexwertes zu jeder der erwähnten Messungen vorgenommen an der ersten Station (112, 120, 122, 124, 126) vorgesehen ist, und wobei das erwähnte Auswählen die Auswahl der erwähnten Messungen vorgenommen an der ersten Station (112, 120, 122, 124, 126) basierend auf den Indexwerten umfasst.

## Revendications

1. Procédé de corrélation de mesures de signaux de télécommunication dans des première et deuxième stations (112, 120, 122, 124, 126) dans un système de communication sans fil (100) comprenant la première station (112, 120, 122, 124, 126) et la deuxième station (112, 120, 122, 124, 126) qui échangent des signaux de télécommunication, le procédé étant **caractérisé par** les opérations consistant à :
prendre et mémoriser de manière répétée une mesure des signaux de télécommunication reçus dans la première station (112, 120, 122, 124, 126) ;
prendre une mesure des signaux de télécommunication reçus dans la deuxième station (112, 120, 122, 124, 126) à un instant particulier ;
transférer d'une station (112, 120, 122, 124, 126) à l'autre (112, 120, 122, 124, 126) au moins un temps de mesure ; et
choisir au moins l'une desdites mesures prises dans la première station (112, 120, 122, 124, 126) qui a été prise à un instant le plus proche dudit instant particulier.

2. Procédé selon la revendication 1, comprenant en outre le fait d'interpoler entre deux desdites mesures prises dans la première station (112, 120, 122, 124, 126) en se basant sur ledit instant particulier.

3. Procédé selon la revendication 1 ou 2, comprenant en outre le fait de signaler ladite mesure prise dans ladite deuxième station (112, 120, 122, 124, 126) à ladite première station (112, 120, 122, 124, 126).

4. Procédé selon la revendication 1 ou 2, comprenant en outre le fait de prendre lesdites mesures prises dans la première station (112, 120, 122, 124, 126) à des intervalles de temps réguliers.

5. Procédé selon la revendication 1 ou 2, comprenant en outre les opérations consistant à :
horodater lesdites mesures prises dans la première station (112, 120, 122, 124, 126) ; et
horodater lesdites mesures prises dans la deuxième station (112, 120, 122, 124, 126).

6. Procédé selon la revendication 5, dans lequel ladite sélection d'au moins l'une desdites mesures prises dans la première station (112, 120, 122, 124, 126) comprend le fait de choisir celle desdites mesures prises dans la première station (112, 120, 122, 124, 126) qui a les valeurs d'horodatage les plus proches de la valeur d'horodatage de ladite mesure prise dans la deuxième station (112, 120, 122, 124, 126).

7. Procédé selon la revendication 5, dans lequel ladite sélection d'au moins l'une desdites mesures prises dans la première station (112, 120, 122, 124, 126) comprend le fait de choisir au moins deux desdites mesures prises dans la première station (112, 120, 122, 124, 126) qui ont les valeurs d'horodatage les plus proches de la valeur d'horodatage de ladite mesure prise dans la deuxième station (112, 120, 122, 124, 126).

8. Procédé selon la revendication 7, dans lequel ladite sélection d'au moins l'une desdites mesures prises dans la première station (112, 120, 122, 124, 126) comprend le fait d'interpoler une mesure la plus proche dans le temps à partir desdites au moins deux mesures pour avoir une valeur d'horodatage sensiblement égale à la valeur d'horodatage de ladite mesure prise dans la deuxième station (112, 120, 122, 124, 126).

9. Procédé selon la revendication 7, lorsque la revendication 5 dépend de la revendication 1, dans lequel ladite sélection d'au moins l'une desdites mesures prises dans la première station (112, 120, 122, 124, 126) comprend le fait d'extrapoler une mesure la plus proche dans le temps à partir desdites au moins deux mesures pour avoir une valeur d'horodatage sensiblement égale à la valeur d'horodatage de ladite mesure prise dans la deuxième station (112, 120, 122, 124, 126).

10. Procédé selon la revendication 1 ou 2, dans lequel ledit système de communication (100) est un système de télécommunications par satellite, ladite première station est une passerelle (120, 122), ladite deuxième station est un terminal d'utilisateur (124, 126), et ladite passerelle (120, 122) et ledit terminal d'utilisateur (124, 126) communiquent via au moins un satellite (116, 118).

11. Procédé selon la revendication 1 ou 2, dans lequel lesdits signaux de télécommunication sont des signaux de canal de trafic à accès multiple par répartition en code à spectre étalé.

12. Système permettant de corréler des mesures de signaux de télécommunication dans des première et deuxième stations (112, 120, 122, 124, 126) dans un système de communication sans fil (100) comprenant la première station (112, 120, 122, 124, 126) et la deuxième station (112, 120, 122, 124, 126) qui échangent des signaux de télécommunication, ledit système de corrélation de mesures étant **caractérisé en ce qu'**il comprend :
des moyens (200 à 222, 232, 300 à 324, 340) permettant de prendre et mémoriser de manière répétée une mesure des signaux de télécommunication reçus dans la première station (112, 120, 122, 124, 126) ;
des moyens (200 à 222, 232, 300 à 324, 340) permettant de prendre une mesure des signaux de télécommunication reçus dans la deuxième station (112, 120, 122, 124, 126) à un instant particulier ;
des moyens permettant de transférer d'une station (112, 120, 122, 124, 126) à l'autre (112, 120, 122, 124, 126) au moins un temps de mesure ; et
des moyens (200 à 222, 232, 300 à 324, 340) permettant de choisir celle desdites mesures prises dans la première station (112, 120, 122, 124, 126) qui a été prise à l'instant le plus proche dudit instant particulier.

13. Système selon la revendication 12, dans lequel :
lesdits moyens (220, 232, 320, 340) de sélection sont adaptés pour choisir l'une ou plusieurs desdites mesures prises dans la première station (112, 120, 122, 124, 126) qui ont été prises à l'instant le plus proche dudit instant particulier ; ledit système comprenant en outre :
des moyens permettant d'interpoler entre lesdites mesures prises dans la première station (112, 120, 122, 124, 126) en se basant sur ledit instant particulier.

14. Système selon la revendication 12 ou 13, comprenant en outre des moyens (200, 210, 212, 220 à 230) permettant de signaler ladite mesure prise dans ladite deuxième station (112, 120, 122, 124, 126) à ladite première station (112, 120, 122, 124, 126).

15. Système selon la revendication 12 ou 13, comprenant en outre des moyens permettant de prendre lesdites mesures prises dans la première station (112, 120, 122, 124, 126) à des intervalles de temps réguliers.

16. Système selon la revendication 12 ou 13, comprenant en outre :
des moyens (230, 232, 340, 348) permettant d'horodater lesdites mesures prises dans la première station (112, 120, 122, 124, 126) ; et
des moyens (230, 232, 340, 348) permettant d'horodater lesdites mesures prises dans la deuxième station (112, 120, 122, 124, 126).

17. Système selon la revendication 16, lorsqu'elle dépend de la revendication 13, dans lequel lesdits moyens (220, 232, 320, 340) de sélection comprennent un moyen permettant de choisir au moins deux desdites mesures prises dans la première station (112, 120, 122, 124, 126) qui ont les valeurs d'horodatage les plus proches de la valeur d'horodatage de ladite mesure prise dans la deuxième station (112, 120, 122, 124, 126).

18. Système selon la revendication 17, dans lequel lesdits moyens d'interpolation comprennent un moyen permettant d'interpoler entre lesdites deux mesures prises dans la première station (112, 120, 122, 124, 126) en se basant sur ledit horodatage de ladite mesure prise dans ladite deuxième station (112, 120, 122, 124, 126).

19. Système selon la revendication 16, lorsqu'elle dépend de la revendication 12, dans lequel lesdits moyens (220, 232, 320, 340) de sélection comprennent un moyen permettant de choisir celle desdites mesures prises dans la première station (112, 120, 122, 124, 126) qui a la valeur d'horodatage la plus proche de la valeur d'horodatage de ladite mesure prise dans la deuxième station (112, 120, 122, 124, 126).

20. Système selon la revendication 12 ou 13, dans lequel ledit système de communication (100) est un système de télécommunications par satellite, ladite première station est une passerelle (120, 122), ladite deuxième station est un terminal d'utilisateur (124, 126), et ladite passerelle (120, 122) et ledit terminal d'utilisateur (124, 126) communiquent en utilisant au moins un satellite (116, 118).

21. Système selon la revendication 12 ou 13, dans lequel lesdits signaux de télécommunication sont des signaux de canal de trafic à accès multiple par répartition en code à spectre étalé.

22. Système selon la revendication 12, comprenant un moyen permettant d'établir une valeur de données probable en utilisant lesdites mesures prises dans ladite première station (112, 120, 122, 124, 126) et en se basant sur ledit instant particulier.

23. Système selon la revendication 22, dans lequel ledit moyen permettant d'établir une valeur de données probable peut être utilisé pour établir ladite valeur de données probable en utilisant trois desdites mesures, ou plus, prises dans ladite première station (112, 120, 122, 124, 126).

24. Système selon l'une quelconque des revendications 12 à 15, 22 ou 23, comprenant un moyen permettant d'attribuer une valeur d'indice à chacune desdites mesures prises dans ladite première station (112, 120, 122, 124, 126), dans lequel lesdits moyens (200 à 222, 232, 300 à 324, 340) de sélection sont adaptés pour choisir lesdites mesures prises dans la première station (112, 120, 122, 124, 126) d'après lesdits valeurs d'indice.

25. Procédé selon la revendication 1, comprenant le fait d'établir une valeur de données probable en utilisant lesdites mesures prises dans ladite première station (112, 120, 122, 124, 126) et en se basant sur ledit instant particulier.

26. Procédé selon la revendication 25, dans lequel le fait d'établir une valeur de données probable comprend le fait d'utiliser trois desdites mesures, ou plus, prises dans ladite première station (112, 120, 122, 124, 126).

27. Procédé selon l'une quelconque des revendications 1 à 4, 25 ou 26, comprenant le fait d'attribuer une valeur d'indice à chacune desdites mesures prises dans ladite première station (112, 120, 122, 124, 126), dans lequel ladite sélection comprend le fait de choisir lesdites mesures prises dans ladite première station (112, 120, 122, 124, 126) d'après lesdits valeurs d'indice.
